Europäisches Patentamt

European Patent Office

Office européen des brevets

(11) Veröffentlichungsnummer: **0 059 789**
**B1**

(12) **EUROPÄISCHE PATENTSCHRIFT**

(45) Veröffentlichungstag der Patentschrift: 21.01.87

(21) Anmeldenummer: **81108600.8**

(22) Anmeldetag: **20.10.81**

(51) Int. Cl.⁴: **G 06 F 11/18**

(54) Einrichtung zur Funktionsprüfung eines Mehrrechnersystems.

(30) Priorität: **09.03.81 DE 3108871**

(43) Veröffentlichungstag der Anmeldung:
**15.09.82 Patentblatt 82/37**

(45) Bekanntmachung des Hinweises auf die
Patenterteilung:
**21.01.87 Patentblatt 87/04**

(84) Benannte Vertragsstaaten:
**AT CH DE LI NL**

(56) Entgegenhaltungen:
**DE-A-2 303 828**
**DE-A-2 813 079**

(73) Patentinhaber: **Siemens Aktiengesellschaft**
**Berlin und München**
**Wittelsbacherplatz 2**
**D-8000 München 2 (DE)**

(72) Erfinder: **Busch, Armin, Dipl.-Ing.**
**Nordendorfsweg 6**
**D-3300 Braunschweig (DE)**

Courier Press, Leamington Spa, England.

**Beschreibung**

Die Erfindung bezieht sich auf eine Einrichtung zur Funktionssprüfung eines Mehrrechnersystems mit n parallel betriebenen, gleichartigen Rechnern und mindestens einem von diesen beschickten Ausgabekanal, einer Steuereinrichtung, die durch Vergleich der von den Rechern getrennt erarbeiteten Datentelegramme einen fehlerhaft arbeitenden Rechner zu erkennen vermag, und einer Datenausgabeeinrichtung, die unter Maßgabe der Ausgangssignale der Steuereinrichtung die Ausgangssignale eines als defekt erkannten Rechners unterdrückt.

Aus der DE—B 21 08 496 ist eine Schaltungsanordnung zur ständigen Funktionskontrolle der Informationsverarbeitung und der Ausgabe von Datentelegrammen bekannt, die durch externen Vergleich von in mehreren gleichartigen Rechnern getrennt erarbeiteten, identischen Datentelegrammen einen nicht ordnungsgerecht arbeitenden Rechner erkennt und dessen Ausgangssignale unterdrückt. Ausgegeben werden Datentelegramme, deren Informationsteil von einem als nicht defekt erkannten Rechner und deren Prüfteil von einem anderen ebenfalls als nicht defekt erkannten Rechner bereitgestellt werden. Zur Funktionsprüfung werden über die Ausgänge der Rechner dann absichtlich gefälschte Datentelegramme abgegeben, wenn der entsprechende Rechner gerade nicht von einer Steuereinrichtung zur Abgabe eines Datentelegrammes auf die Datenausgabekanäle ausgewählt ist.

Zum bestimmungsgemäßen Arbeiten dieser bekannten Schaltungsanordnung ist eine in signaltechnischem Sinne sichere Durchschalteeinrichtung vorgesehen, über die die Ausgangssignale der Rechner auf die Ausgabekanäle gelangen. Diese Durchschalteeinrichtung soll sicherstellen, daß ausschließlich die Ausgangssignale der jeweils als ordnungsgerecht erkannten Rechner und nicht etwa solche eines oder mehrerer defekter Rechner fortgeschaltet werden. Durch die Ausführung in fail-safe-Technik wird erreicht, daß jeder dieses Funktionsverhalten in Frage stellende Defekt innerhalb der Datendurchschalteeinrichtung selbst die weitere Ausgabe von Datentelegrammen auf die Ausgabekanäle verhindert.

Aufgabe der vorliegenden Erfindung ist es, eine Einrichtung nach dem Oberbegriff des Patentanspruches anzugeben, die ohne eine in fail-safe-Technik realisierte Datendurchschalteeinrichtung auskommt. Die Einrichtung soll dabei so ausgebildet sein, daß nicht jede beliebige Störung innerhalb des Mehrrechnersystems bereits zum Abschalten des Systems führt, sondern eine solche Maßnahme soll nur dann vorgenommen werden, wenn keine gesicherte Datenausgabe mehr möglich ist; Störungen, die sich durch Abschalten eines Rechners und/oder Aufschalten eines intakten Rechners auf einen Datenausgabekanal beseitigen lassen, sollen keine Auswirkungen auf die gesicherte Datenausgabe haben.

Diese Aufgabe löst die Erfindung für eine im Oberbegriff des Patentanspruches 1 angegebene Einrichtung durch die im Kennzeichen des Anspruches 1 angegebenen Merkmale. Vorteilhafte Ausbildungen der erfindungsgemäßen Einrichtung sind in den Unteransprüchen angegeben.

Eine besonders vorteilhafte Ausführungsform der Erfindung sieht vor, daß die Rechner selbst evtl. auftretende Defekte nach Art und Ort des Defektes bestimmen und daß ausschließlich die als ordnungsgerecht arbeitend erkannten Rechner die nicht ordnungsgerecht arbeitenden Rechner abschalten, die Ausgabekanäle des Systems auf intakte Rechner aufschalten bzw. die Abschaltung des Mehrrechnersystems herbeiführen.

Die Erfindung ist nachstehend anhand der Zeichnung näher erläutert. In der Zeichnung sind nur diejenigen Elemente dargestellt, die zur Erläuterung der Erfindung unbedingt erforderlich sind.

Die Zeichnung zeigt in

Figur 1 ein Mehrrechnersystem mit einer durch externe Vergleicher gesteuerten Datenausgabeeinrichtung, in

Figur 2 ein Mehrrechnersystem mit durch die Rechner gesteuerter Datenausgabeeinrichtung und in den

Figuren 3a und 3b tabellarisch aufgelistete Vergleichs- und Steuersignale der Rechner bei verschiedenen Defekten und die von diesen Steuersignalen veranlaßten Reaktionen des Mehrrechnersystems.

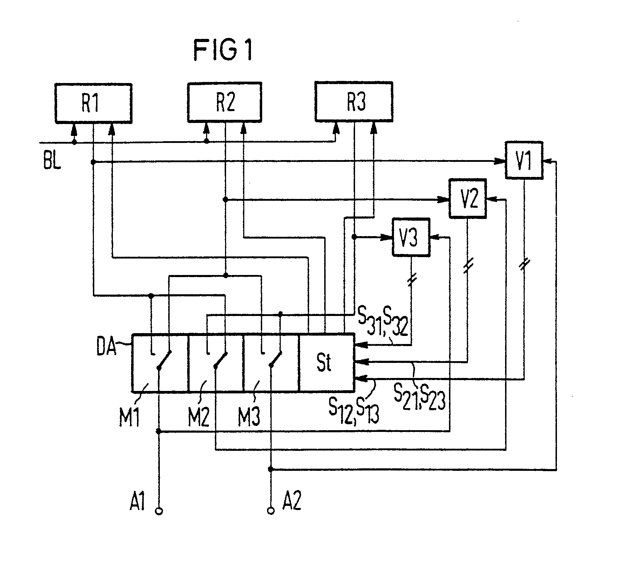

Figur 1 zeigt ein aus drei gleichartigen Rechnern R1 bis R3 gebildetes Rechnersystem, das über symbolisch angedeutete Busleitungen BL mit Prozeßdaten versorgt wird und über Ausgabekanäle A1, A2 dem Prozeß Daten in Form von Datentelegrammen zur Verfügung stellt. Zum Ausgeben von Daten auf die Ausgabekanäle A1 und A2 des Systems dient eine als Multiplexer ausgebildete Datenausgabeeinrichtung DA. Diese Datenausgabeeinrichtung besteht aus drei Multiplexerschaltern M1 bis M3, die von einer zugehörigen Multiplexer-Steuereinrichtung St individuell steuerbar sind. Jeder Multiplexerschalter weist zwei Eingänge und einen Ausgang auf. An die beiden Eingänge jedes Multiplexerschalters sind jeweils zwei der drei Rechner angeschlossen, und zwar in einer Kombination, die verschieden ist von der Rechnerkombination, die auf die anderen Multiplexerschalter aufgeschaltet wird. Jeder Multiplexerschalter schaltet dabei einen anderen der drei von den drei Rechnern gespeiste Eingangskanäle auf seinen Ausgangskanal. Für den Vergleich der von der Rechnern erarbeiteten Datentelegramme sind Vergleicher V1 bis V3 vorgesehen. Der ein Eingang jedes dieser Vergleicher ist an den Ausgang eines der Rechner und der andere Eingang an den Ausgang desjenigen Multiplexerschalters angeschlossen, dessen Eingänge auf die beiden anderen Rechner geführt sind.

In einer ersten Prüfphase eines Prüfbetriebes mögen die Multiplexerschalter M1 bis M3 die dargestellte Schaltstellung einnehmen. In dieser Schaltstellung ist der Vergleicher V1 an den Ausgang des Rechners R1 direkt und über den Multiplexerschalter M3 an den Ausgang des Rechners R3 angeschlossen. Er vergleicht die ihm von beiden Rechnern zugeführten Datentelegramme und meldet ein entsprechendes Ergebnissignal an die Multiplexer-Steuereinrichtung St. In entsprechender Weise ist der Vergleicher V2 an den Ausgang des Rechners R2 und über den Multiplexerschalter M2 an den Ausgang des Rechners R1 angeschlossen, während der Vergleicher V3 die Datentelegramme des Rechners R3 mit denen des Rechners R2 vergleicht. Eine erste Prüfphase des Prüfbetriebes ist beendet wenn die Vergleicher ihre Vergleichsergebnisse an die Multiplexer-Steuereinrichtung St gemeldet haben. Auf die erste Prüfphase folgt eine zweite Prüfphase, für die die Multiplexer-Steuereinrichtung St—beispielsweise veranlaßt durch einen zu Beginn der ersten Prüfphase eingestellten Zeitschalter—die Umsteuerung der Multiplexerschalter veranlaßt. Der Vergleicher V1 ist nun an den Rechner R1 und über den Multiplexerschalter M3 an den Rechner R2 angeschlossen. Der Vergleicher V2 vergleicht die Datentelegramme des Rechners R2 mit denen des Rechners R3 und der Vergleicher V3 ist auf den Rechner R3 und den Rechner R1 geschaltet. Die zweite Prüfphase ist abgeschlossen, wenn die Vergleicher das von ihnen festgestellte Vergleichsergebnis an die Multiplexer-Steuereinrichtung St gemeldet haben.

Die Multiplexer-Steuereinrichtung erkennt auf die gleiche Art und Weise wie in der DE—B—21 08 496 angegeben aus den ihr gemeldeten Vergleichsergebnissen ob die über die Datenausgabeeinrichtung DA jeweils durchgeschalteten Rechner übereinstimmende Datentelegramme ausgeben oder nicht. Solange dies der Fall ist, gibt die Steuereinrichtung die weitere Datenverarbeitung frei. Ist dies nicht der Fall, so lokalisiert sie die Störung nach Art und Ort und reagiert in einer Weise, die eine Gefährdung des Prozesses oder seines Umfeldes durch fehlerhafte Rechnerdaten ausschließt: Wenn eine Störung auf einem Rechner oder auf bestimmte Eingänge der Multiplexerschalter zu lokalisieren ist, bewirkt die Multiplexer-Steuereinrichtung St die Abschaltung des jeweils als nicht ordnungsgerecht arbeitend erkannten Rechners und die bleibende Aufschaltung eines als ordnungsgerecht arbeitend erkannten Rechners auf den oder die betreffenden Multiplexerschalter. Liegt eine Störung vor, die durch Abschalten eines Rechners und bleibendes Aufschalten eines anderen Rechners auf die Multiplexerschalter nicht behoben werden kann, beispielsweise wenn einer der Ausgabekanäle A1 oder A2 unterbrochen ist, dann veranlaßt die Multiplexer-Steuereinrichtung St die Abschaltung des Gesamtsystems.

Eine Funktionsprüfung des Mehrrechnersystems kann grundsätzlich zu jedem beliebigen Zeitpunkt stattfinden. Vorteilhaft ist es, die Funktionsprüfung des Mehrrechnersystems durch Abrufen eines dafür vorgesehenen Prüfprogrammes beim Erreichen vorgegebener Fixpunkte des Rechnerverarbeitungsprogrammes zu veranlassen und das Rechnerverarbeitungsprogramm für die Dauer der Funktionsprüfung zu unterbrechen. Derartige Rechnerprogramm-Fixpunkte können beispielsweise vor das Abarbeiten von Befehlen mit sicherheitstechnischer Auswirkung gesetzt sein.

Es ist zweckmäßig, die Ausgabe der von der Rechnern erarbeiteten Datentelegramme während des Prüfbetriebes an den Prozeß zu verhindern. Dies läßt sich erreichen, indem man die am Ausgang der Datenausgabeeinrichtung während des Prüfbetriebes anliegenden Datentelegramme einer fiktiven Adresse zuordnet oder indem man beispielsweise durch Gatterschaltungen die Ausgabe der auf den Ausgabekanälen liegenden Datentelegramme vorübergehend sperrt.

Dadurch, daß in den Vergleich der von verschiedenen Rechnern stammenden Datentelegramme die am Ausgang der Datenausgabeeinrichtung anliegenden Datentelegramme einbezogen sind, kann die Steuereinrichtung eine gesicherte Aussage darüber machen, ob tatsächlich Daten von als ordnungsgerecht arbeitend erkannten Rechnern auf die Ausgabekanäle gelangen oder nicht. Die Datenausgabeeinrichtung braucht deshalb nicht in fail-safe-Technik realisiert sein, sondern es genügt, hierfür handelsübliche Schaltmittel zu verwenden. Jeder Bauteilfeher innerhalb der Datenausgabeeinrichtung macht sich über die Vergleichsergebnisse bemerkbar, so daß sich nötigenfalls das System abschalten läßt.

Hat die Multiplexer-Steuereinrichtung aus den ihr zugeführten Ergebnissignalen einen defekten Eingangskanal geortet oder einen defekten Rechner erkannt und die Ausgabekanäle über den Multiplexer auf solche Eingangskanäle geschaltet, über die ordnungsgerechte Datentelegramme zu erwarten sind, dann arbeitet das dargestellte Dreirechnersystem als Zweirechnersystem weiter. Muß die Steuereinrichtung zur Forführung des Betriebes mindestens einen der Multiplexerschalter aus seiner in der zweiten Prüfphase eingenommenen Schaltstellung in die jeweils andere Schaltstellung umsteuern, so ist es vorteilhaft, vor der Freigabe der Daten einen erneuten Vergleich der anliegenden Datentelegramme durchzuführen. Auf diese Weise wird geprüft, ob nach dem Umsteuern der Datenausgabeeinrichtung auf den Ausgabekanälen tatsächlich übereinstimmende Daten anliegen oder nicht.

Da das angenommene Dreirechnersystem bei Ausfall eines Rechners als Zweirechnersystem weiterarbeitet, kann beim Feststellen dieses Defektes bzw. wird beim Durchführen eines folgenden Prüfvorganges nach dem Abschalten eines Rechners der Fall eintreten, daß jeweils nur von zwei Rechnern Ergebnissignale an die Steuereinrichtung abgesetzt werden. Aus diesem Grunde ist die Umsteuerung der Multiplexerschalter für das Einleiten der zweiten Prüfphase bzw. die gezielte Umsteuerung einzelner Multiplexerschalter im Anschluß an die zweite Prüfphase nicht abhängig zu machen vom Vorliegen aller Ergebnissignale, sondern es reicht aus, die Umsteuerung der Multiplexerschalter außer von einer Zeitbedingung abhängig zu machen vom Vorhandensein der Ergebnissignale mindestens zweier Vergleicher bzw. Rechner.

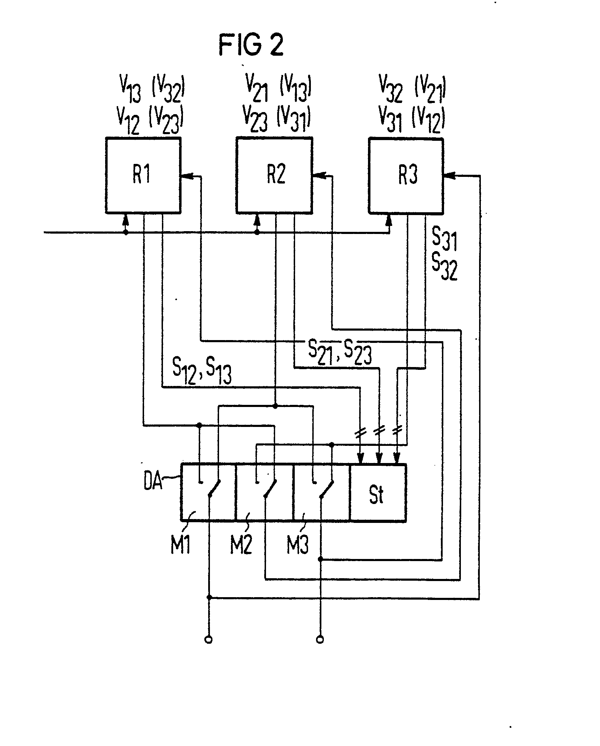

Figur 2 zeigt eine bevorzugte Ausführungsform der Erfindung, bei der die Rechner selbst die Vergleichsergebnisse bilden. Die Rechner speichern die von ihnen gebildeten Vergleichsergebnisse ab und geben diese Vergleichsergebnisse mindestens an diejenigen Nachbar-Rechner weiter, welche diesen Vergleich nicht selbst durchführen können. So vergleicht z.B. der Rechner R1 die ihm über den Multiplexerschalter M3 zugeführten Datentelegramme des Rechners R3 mit den von ihm selbst erarbeiteten Datentelegrammen und speichert das Vergleichsergebnis, das in Figur 2 durch den Buchstaben V mit den Indizes 13 für die sich vergleichenden Rechner symbolisiert ist, ab. In entsprechender Weise bildet der Rechner R2 ein Vergleichersergebnis $V_{21}$ und der Rechner R3 ein Vergleichsergebnis $V_{32}$.

Veranlaßt durch das Vorliegen der Vergleichsergebnisse und/oder veranlaßt durch den Ablauf einer vorgegebenen Zeitspanne steuert der Multiplexer-Steuerschalter St nach Ablauf der ersten Prüfphase sämtliche Multiplexerschalter M1 bis M2 in die jeweils andere Schaltstellung. Dabei vergleicht der Rechner R1 die von ihm selbst erarbeiteten Datentelegramme mit denen des Rechners 2 und bildet das Vergleichsergebnis $V_{12}$. Der Rechner R2 vergleicht sich mit dem Rechner R3 und bildet das Vergleichsergebnis $V_{23}$ und der Rechner R3 vergleicht sich mit dem Rechner R1 und bildet das Vergleichsergebnis $V_{31}$. Über die jeweils durchgeschalteten Ausgangsleitungen der Rechner informieren sich die Rechner gegenseitig über die von ihnen gebildeten und von ihnen gespeicherten Vergleichsergebnisse. So übermittelt der Rechner R1 sein Vergleichsergebnis $V_{13}$ an den Rechner R2 und sein Vergleichsergebnis $V_{12}$ and den Rechner R3, während der Rechner R2 seine Vergleichsergebnisse $V_{21}$ und $V_{23}$ an den Rechner R3 bzw. R1 übermittelt. Die von anderen Rechnern jeweils übermittelten Vergleichsergebnisse sind in Figur 2 oberhalb der Rechner in Klammern angegeben. Aus diesen Vergleichsergebnissen sollen nun die Rechner im Falle einer Störung die Art und den Ort der Störung selbsttätig erkennen und die entsprechenden Reaktionen, d.h. das Abschalten eines Rechners, das Aufschalten von als ordnungsgerecht erkannten Rechnern auf die Ausgabekanäle bzw. das Abschalten des Mehrrechnersystems herbeiführen.

Im nachfolgenden ist angegeben, auf welche Weise dies bei dem angenommenen Dreirechnersystem im einzelnen geschieht. Hierzu wird davon ausgegangen, daß jeder der Rechner aufgrund der von ihm selbst gebildeten und der ihm übermittelten Vergleichsergebnisse zwei Steuersignale zu setzen vermag, die für die Steuerung der Multiplexer-Steuereinrichtung St benötigt werden. Diese Steuersignale werden nur dann gesetzt, wenn für die betreffenden Rechner bestimmte Bedingungen erfüllt sind, nämlich die, daß die von einem Rechner aktiv durchgeführten Vergleiche mit den Datentelegrammen der Nachbar-Rechner zu einem positiven Ergebnis geführt haben und wenn außerdem feststeht, daß die Datentelegramme der Rechner, mit denen er sich aktiv verglichen hat, auch von dem jeweils anderen Rechner als ordnungsgerechs anerkannt wurden bzw. daß diese Anerkennung deshalb ausgeblieben ist, weil durch das von ihm gebildete weitere Vergleichsergebnis festgestellt wurde, daß das fragliche Vergleichsergebnis deshalb nicht positiv ausfallen konnte, weil der in den Vergleichsvorgang einbezogene fremde Rechner ein fehlerhaftes Datentelegramm ausgab. Die Gesetzmäßigkeiten, nach denen die Steuersignale sich bestimmen, lauten damit folgendermaßen:

$$S_{12} = V_{12} \wedge (V_{32} \vee \overline{V}_{13})$$

$$S_{13} = V_{13} \wedge (V_{23} \vee \overline{V}_{12})$$

Hierin sind $S_{12}$ und $S_{13}$ die beiden Steuersignale eines Rechners 1 und V das die Übereinstimmung, $\overline{V}$ das die Nichtübereinstimmung der Datentelegramme der indizierten Rechner 1 bis 3 kennzeichnende Vergleichsergebnis. In entsprechender Weise wie die Steuersignale $S_{12}$ und $S_{13}$ durch den Rechner R1 gebildet werden, werden auch die Steuersignale $S_{21}$ und $S_{23}$ bzw. $S_{31}$ und $S_{32}$ durch die beiden anderen Rechner gebildet.

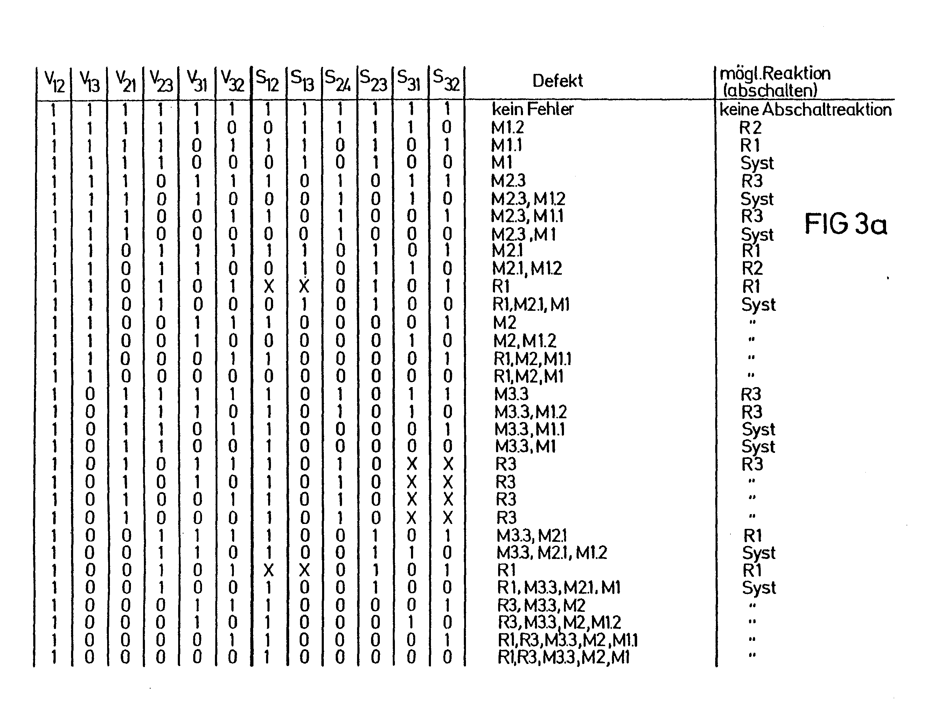

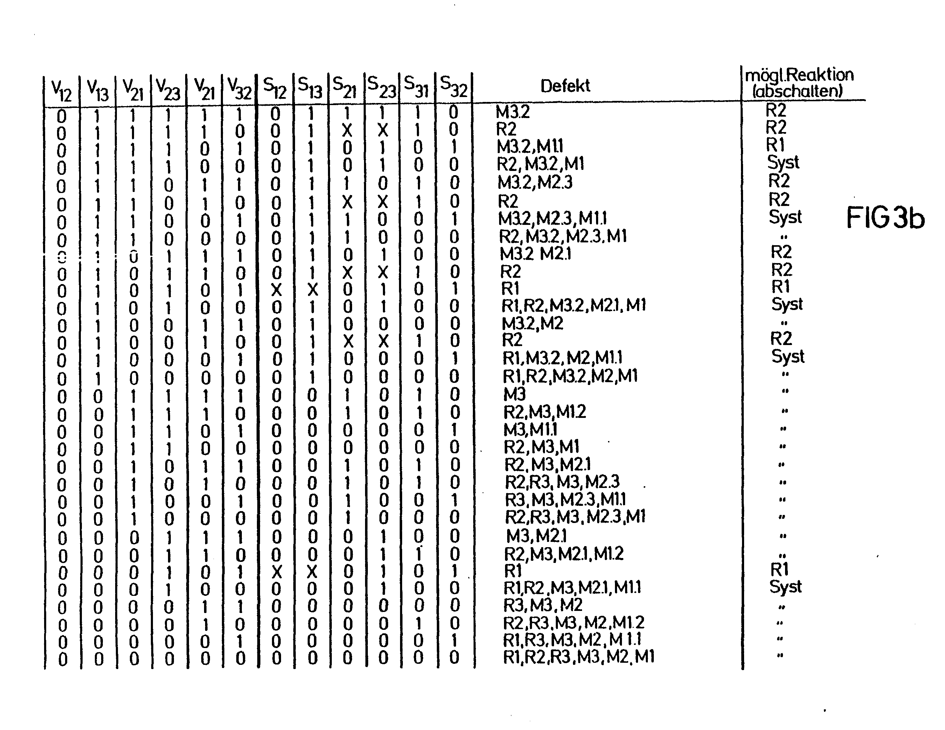

In den Figuren 3a und 3b sind sämtliche möglichen Kombinationen von Vergleichsergebnissen aufgelistet wie sie sich bei den verschiedenen möglichen Defekten innerhalb des Systems ergeben können. Dabei ist ein Defekt auf einem Eingangskanal·eines Multiplexerschalters durch die Benennung dieses Schalters zusammen mit einem Kennzeichen für den diesen Eingang speisenden Rechner und ein Defekt auf dem Ausgangskanal eines Multiplexers durch die alleinige Benennung dieses Schalters gekennzeichnet. Aus der Auflistung der Figuren 3a und 3b ergibt sich, daß im Störungsfall des Dreirechnersystem durch Abschalten eines Rechners und Aufschalten der Ausgabekanäle auf als ordnungsgerecht arbeitend erkannte Rechner in ein Zweirechnersystem mit überprüften Datentelegrammen umgesetzt werden kann, wenn die Steuersignalkombinationen die nachfolgend tabellarisch angeführt Zuordnung aufweisen:

| $S_{12}$ | $S_{13}$ | $S_{21}$ | $S_{23}$ | $S_{31}$ | $S_{22}$ | Reaktion |
|---|---|---|---|---|---|---|
| X | X | 0 | 1 | 0 | 1 | R1 abschalten |
| 0 | 1 | X | X | 1 | 0 | R2 abschalten |
| 1 | ·0 | 1 | 0 | X | X | R3 abschalten |

# 0 059 789

Dabei bedeuten eine 1 für eine Steuersignal, daß das betreffende Steuersignal gesetzt wurde, eine 0, daß das betreffende Steuersignal nicht gesetzt wurde und ein X, daß es für die Reaktion des Systems nicht darauf ankommt, ob das betreffende Steuersignal gesetzt oder nicht gesetzt ist. Alle übrigen Steuersignalkombinationen mit Ausnahme der den ordnungsgerechten Betrieb des Systems kennzeichnenden Folge 111111 veranlassen die Abschaltung des Rechnersystems.

Beim Festellen eines nicht ordnungsgerecht arbeitenden Rechners werden dessen Steuersignale beispielsweise durch Abschalten der Stromversorgung für diesen Rechner irreversibel auf null gesetzt. Das System arbeitet dann als Zweirechnersystem weiter. Beide noch intakten Rechner könne sich weiterhin vergleichen und Steuersignale bilden. Bei Defekt eines weiteren Rechners wird dies von dem dann noch intakten Rechner erkannt. Dieser Rechner veranlaßt über seine Steuersignale das irreversible Abschalten des gesamten Systems.

Aus der tabellarischen Zuordnung der Steuersignale zu der durch sie veranlaßten Reaktion ist zu erkennen, daß die Abschaltung eines defekten Rechners ausschließlich durch die Steuersignale der als ordnungsgerecht arbeitend erkannten beiden anderen Rechner erfolgt. Damit ist die Möglichkeit gegeben, ohne zusätzliche Gerätschaften für die Steuerung der Multiplexer-Steuereinrichtung auszukommen, weil die Multiplexer-Steuerung ausschließlich durch die Signale der noch ordnungsgerecht arbeitenden Rechner, nicht aber durch einen gestörten Rechner, wirksam gesteuert wird.

Die in der tabellarischen Auflistung der Figuren 3a und 3b angegebenen Reaktionen auf die jeweils angenommenen Defekte haben nicht absoluten Charakter. Sie sind dort nach sicherheitstechnischen Gesichtspunkten festgelegt worden, nach denen der Ausfall jedes nicht redundanten Elementes die Abschaltung des Systems herbeiführen sollte. Es ist aber durchaus denkbar, im Einzelfall weniger strenge Maßstäbe an die Fortführung des Betriebes im Störungsfall zu legen als im dargestellten Ausführungsbeispiel angenommen. So sollte z.B. nach Figur 3b der Ausfall des Multiplexerschalters M2 bereits die Abschaltung des Gesamtsystems herbeiführen. Da der Schalter M2 an der Ausgabe von Daten auf den Ausgabekanälen A1 und A2 nicht beteiligt ist, also keine direkten Auswirkungen aus dem angenommenen Defekt zu erwarten sind, kann es ggf. durchaus genügen, diese Störung in eine Störungsmeldung umzusetzen und das System im übrigen weiterarbeiten zu lassen. In entsprechender Weise ließen sich bei weniger strengen Sicherheitsanforderungen an das Rechnersystem zu einzelnen weiteren Defekten auch andere, weniger gravierende Reaktionen zuordnen.

Die erfindungsgemäße Einrichtung ist auch auf Datenverarbeitungssysteme mit mehr als drei Rechnern anwendbar, allerdings werden dann die von der Rechnern für die Multiplexer-Steuereinrichtung benötigten Steuersignale entsprechend zu modifizieren sein und auch die einzelne oder gegebenenfalls auch mehrere Rechner abschaltenden Steuersignalkombinationen müssen aus entsprechenden tabellarischen Auflistungen neu bestimmt werden. Diese Bestimmung bereitet dem Fachmann jedoch keine unüberwindlichen Schwierigkeiten.

**Patentansprüche**

1. Einrichtung zur Funktionsprüfung eines Mehrrechnersystems mit $n>2$ parallel betriebenen, gleichartigen Rechnern und mindestens einem von diesen beschickten Ausgabekanal einer Steuereinrichtung, die durch Vergleich der von den Rechnern getrennt erarbeiteten, identischen Datentelegramme einen fehlerhaft arbeitenden Rechner zu erkennen vermag und einer Datenausgabeeinrichtung, die unter Maßgabe der Ausgangssignale der Steuereinrichtung die Ausgangssignale eines als defekt erkannten Rechners unterdrückt, dadurch gekennzeichnet, daß a) die Datenausgabeeinrichtung (DA) als im Prüfbetrieb zyklisch durchsteuerbarer Multiplexer mit n Multiplexerschaltern (M1, M2, M3) zum wahlweisen Durchschalten von jeweils $(n-1)$ Eingangskanälen auf jeweils einen Ausgangskanal ausgebildet ist, daß b) die auf einen Multiplexerschalter (z.B. M1) geführten Eingangskanäle an jeweils $(n-1)$ Rechner einer Rechnerkombination (R1, R2) der n Rechner (R1, R2, R3) angeschlossen sind, die verschieden ist von der Rechnerkombinationen (R1, R3 und R2, R3) der anderen Multiplexerschalter (M2, M3), daß c) jeder Multiplexerschalter einen anderen der n Eingangskanäle auf seinen Ausgangskanal schaltet und daß d) der Ausgangskanal jedes Multiplexerschalters (z.B. M1) für den Vergleich der dort jeweils anliegenden Datentelegramme mit einem Datentelegramm eines anderen Rechners auf denjenigen Rechner (R3) geführt ist, der nicht zu der den betreffenden Multiplexerschalter speisenden Rechnerkombination (R1, R2) gehört.

2. Einrichtung nach Anspruch 1, dadurch gekennzeichnet, daß die Funktionsprüfung des Mehrrechnersystems durch Abrufen eines dafür vorgesehenen Prüfprogrammes beim Erreichen vorgegebener Fixpunkte des Rechner-Verarbeitungsprogrammes veranlaßt ist und das Rechner-Verarbeitungsprogramm für die Dauer der Funktionsprüfung unterbricht.

3. Einrichtung nach Anspruch 1 oder 2, dadurch gekennzeichnet, daß das Prüfprogramm den während der Funktionsprüfung des Mehrrechnersystems am Ausgang der Datenausgabeeinrichtung anliegenden Datentelegrammen eine fiktive Adresse zuordnet.

4. Einrichtung nach Anspruch 1 oder 2, dadurch gekennzeichnet, daß die Steuereinrichtung die Ausgabe der während der Funktionsprüfung des Mehrrechnersystems am Ausgang der Datenausgabeeinrichtung anliegenden Datentelegramme sperrt.

5. Einrichtung nach einem der Ansprüche 1 bis 4, dadurch gekennzeichnet, daß die Rechner selbst die

5

**0 059 789**

Vergleichsergebnisse bilden, daß die Rechner (z.B. R1 in Fig. 2) die von ihnen gebildeten Vergleichsergebnisse (z.B. $V_{12}$) abspeichern und die gespeicherten Vergleichsergebnisse mindestens an die jenigen Rechner (R3) weitergeben, welche diesen Vergleich nicht selbst durchführen können bis alle Rechner (R1, R2, R3) über mindestens (n−2) Vergleichsergebnisse unterrichtet sind und daß die Rechner aufgrund der ihnen bekannten Vergleichsergebnisse einen aufgetretenen Defekt nach Art und Ort bestimmen.

6. Einrichtung nach Anspruch 5, dadurch gekennzeichnet, daß die Rechner (z.B. R1) ein von ihnen aufgrund des Vergleichs mit den Datentelegrammen eines anderen Rechners (z.B. R2) jeweils gebildetes und gespeichertes Vergleichsergebnis ($V_{12}$) beim Durchführen des jeweils folgenden Telegrammvergleiches mit einem weiteren Rechner (R3) an diesen weiteren Rechner übermitteln.

7. Einrichtung nach Anspruch 5 oder 6, dadurch gekennzeichnet, daß die Rechner die ermittelten und die ihnen übermittelten Vergleichsergebnisse daraufhin untersuchen, ob sich die Ausgabekanäle (A1, A2) des Multiplexers (DA) ausschließlich auf als ordnungsgerecht erkannte Rechner (R1, R2, R3) aufschalten lassen und daß die Rechner bei positivem Resultat diese Aufschaltung veranlassen, dagegen bei negativem Resultat das Mehrrechnersystem abschalten.

8. Einrichtung nach Anspruch 5 und 7, dadurch gekennzeichnet, daß ausschließlich die als ordnungsgerecht arbeitend erkannten Rechner (z.B. R2, R3) die als nicht ordnungsgerecht arbeitend erkannten Rechner (R1) abschalten und die Umsteuerung des Multiplexers (DA) bzw. die Abschaltung des Mehrrechnersystems herbeiführen.

9. Einrichtung nach Anspruch 8 für die Verwendung in einem Drei-Rechnersystem, dadurch gekennzeichnet, daß jeder Rechner (z.B. R1) nach dem Bilden zweier Vergleichsergebnisse ($V_{12}$, $V_{13}$) und der Kenntnisnahme mindestens derjeniger Vergleichsergebnisse ($V_{32}$, $V_{23}$) seiner beiden Nachbarrechner (R2, R3), die sich nicht auf ihn beziehen, zwei Steuersignale ($S_{12}$, $S_{13}$) stezt (1), sofern die folgende Bedingung erfüllt ist:

$$S_{12} = V_{12} \wedge (V_{32} \vee \overline{V}_{13})$$

$$S_{13} = V_{13} \wedge (V_{23} \vee \overline{V}_{12}), \qquad \text{worin}$$

$S_{12}$ und $S_{13}$ die beiden Steuersignale eines Rechners 1 sind und V ein die Übereinstimmung, $\overline{V}$ ein die Nichtübereinstimmung der Datentelegramme der indizierten Rechner 1 bis 3 kennzeichnendes Vergleichsergebnis darstellt und daß alle dabei auftretenden Steuersignalkombinationen der Rechner (R1, R2, R3) mit Ausnahme der folgenden tabellarisch angegebenen Reaktionszuordnung.

| $S_{12}$ | $S_{13}$ | $S_{21}$ | $S_{23}$ | $S_{31}$ | $S_{32}$ | Reaktion |
|---|---|---|---|---|---|---|
| 1 | 1 | 1 | 1 | 1 | 1 | System in Ordnung |
| X | X | 0 | 1 | 0 | 1 | Rechner 1 abschalten |
| 0 | 1 | X | X | 1 | 0 | Rechner 2 abschalten |
| 1 | 0 | 1 | 0 | X | X | Rechner 3 abschalten |

(X=beliebig 1 oder 0)

die Abschaltung des Rechnersystems veranlassen.

**Revendications**

1. Dispositif pour contrôler le fonctionnement d'un système à calculateurs multiples comportant n>2 calculateurs de même type fonctionnant en parallèle et au moins un canal de sorte équipé de ces calculateurs, un dispositif de commande qui peut identifier un calculateur fonctionnant de façon défectueuse, par comparaison des télégrammes identiques de données élaborés séparément par les calculateurs, et un dispositif de sortie de données, qui, en fonction des signaux de sortie du dispositif de commande, supprime les signaux de sortie d'un calculateur identifié comme étant défectueux, caractérisé par le fait que a) le dispositif de sortie de données (DA) est réalisé sous la forme d'un multiplexeur pouvant être commandé cycliquement en étant placé dans le fonctionnement d'essai et comportant n commutateurs de multiplexage (M1, M2, M3) permettant au choix l'interconnexion directe de respectivement (n−1) canaux d'entrée respectivement à un canal de sortie, que b) les canaux d'entrée envoyés à un commutateur de multiplexage (par exemple M1) sont raccordés à respectivement (n−1) calculateurs d'un ensemble combiné de calculateurs (R1, R2) parmi les n calculateurs (R1, R2, R3), qui est différent des ensembles combinés de calculateurs (R1, R3 et R2, R3) des autres commutateurs de multiplexage (M2, M3), que c) chaque commutateur de multiplexage commute un autre des n canaux d'entrée sur son canal de sortie et que d) le canal de sortie de chaque commutateur de multiplexage (par exemple M1) est raccordé, pour la comparaison des télégrammes de données qui sont respectivement appliqués dans ce

6

commutateur, à un télégramme de données d'un autre calculateur, au calculateur (R3) qui n'appartient pas à l'ensemble combiné de calculateurs (R1, R2) alimentant le commutateur de multiplexage considéré.

2. Dispositif suivant la revendication 1, caractérisé par le fait que le contrôle du fonctionnement du système à calculateurs multiples est déclenché par appel d'un programme d'essai prévu à cet effet, lorsque des points fixes prédéterminés du programme de traitement des calculateurs sont atteints, et interrompt le programme de traitement des calculateurs pendant la durée du contrôle de fonctionnement.

3. Dispositif suivant la revendication 1 ou 2, caractérisé par le fait que le programme d'essai associe une adresse fictive aux télégrammes de données appliquées à la sortie du dispositif de sortie de données pendant le contrôle de fonctionnement du système à calculateurs multiples.

4. Dispositif suivant la revendication 1 ou 2, caractérisé par le fait que le dispositif de commande bloque la sortie des télégrammes de données appliqués à la sortie du dispositif de sortie de données pendant le contrôle de fonctionnement du système à calculateurs multiples.

5. Dispositif suivant l'une des revendications 1 à 4, caractérisé par le fait que les calculateurs eux-mêmes forment les résultats de comparaison, que les calculateurs (par exemple R1 sur la figure 2) mémorisent les résultats de comparaison (par exemple $V_{12}$) qui sont formés par ces calculateurs et retransmettent les données de comparaison mémorisées au moins aux calculateurs (R3), qui ne peuvent pas réaliser eux-mêmes cette comparaison jusqu'à ce que l'ensemble des calculateurs (R1, R2, R3) ait reçu au moins $(n-2)$ résultats de comparaison, et que les calculateurs déterminent le type et l'emplacement d'un défaut apparu, sur la base des résultats de comparaison qu'ils connaissent.

6. Dispositif suivant la revendication 5, caractérisé par le fait que les calculateurs (par exemple R1) retransmettent un résultat de comparaison ($V_{12}$) respectivement formé et mémorisé sur la base de la comparaison avec les télégrammes de données d'un autre calculateur (par exemple R2), lors de l'exécution de la comparaison respectivement suivante des télégrammes avec un autre calculateur (R3), à cet autre calculateur.

7. Dispositif suivant la revendication 5 ou 6, caractérisé par le fait que les calculateurs examinent les résultats de comparaison déterminés et les résultats de comparaison, qui leur sont transmis, pour savoir si les canaux de sortie (A1, A2) du multiplexeur (DA) peuvent être transférés ensuite à des calculateurs (R1, R2, R3) identifiés comme fonctionnant correctement, et que dans le cas d'un résultat positif, les calculateurs déclenchent ce raccordement, tandis que dans le cas d'un résultat négatif, ils débranchent le système à calculateurs multiples.

8. Dispositif suivant les revendications 5 et 7, caractérisé par le fait qu'exclusivement les calculateurs (par exemple R2, R3), identifiés comme fonctionnant correctement, débranchent les calculateurs (R1) identifiés comme fonctionnant de façon non correcte, et réalisent l'inversion de la commande du multiplexeur (DA) ou le débranchement du système à calculateurs multiples.

9. Dispositif suivant la revendication 8 pour son utilisation dans un système à trois calculateurs, caractérisé par le fait qu'après la formation de deux résultats de comparaison ($V_{12}$, $V_{13}$) et avec la connaissance d'au moins les résultats de comparaison ($V_{32}$, $V_{23}$) des deux calculateurs (R2, R3), lui sont voisins et qui ne sont pas en relation avec lui, chaque calculateur (par exemple R1) etablit (1) deux signaux de commande ($S_{12}$, $S_{13}$) dans la mesure où la condition suivante est satisfaite:

$$S_{12}=V_{12}\wedge(V_{32} \vee \overline{V}_{13})$$

$$S_{13}=V_{13}\wedge(V_{23} \vee \overline{V}_{12}),$$

où $S_{12}$ et $S_{13}$ sont les deux signaux de commande d'un calculateur 1 et V représente un résultat de comparaison caractérisant la coïncidence et $\overline{V}$ un résultat de comparaison caractérisant la non-coïncidence de télégrammes de données des calculateurs indicés 1 à 3, et que toutes les combinaisons apparaissantes des signaux de commande des calculateurs (R1, R2, R3) déclenchent le débranchement du système de calculateurs à l'exception de l'association suivante de réactions, indiquée sous la forme d'un tableau

| $S_{12}$ | $S_{13}$ | $S_{21}$ | $S_{23}$ | $S_{31}$ | $S_{32}$ | Réaction |
|---|---|---|---|---|---|---|
| 1 | 1 | 1 | 1 | 1 | 1 | Le système fonctionne correctement. |
| X | X | 0 | 1 | 0 | 1 | Débranchement du calculateur 1 |
| 0 | 1 | X | X | 1 | 0 | Débranchement du calculateur 2 |
| 1 | 0 | 1 | 0 | X | X | Débranchement du calculateur 3 |

(X=au choix 1 ou 0).

# 0 059 789

## Claims

1. A device for checking the functioning of a multi-computer system comprising n>2 parallel operators, identical computers and at least one output channel which is supplied by said computers, a control device which, by comparing the data telegrams separately processed by the computers, is capable of recognising an incorrectly operating computer, and a data output device which, in accordance with the output signals of the control device, suppresses the output signals of a computer which has been recognised as defective, characterised in that a) the date output device (DA) is designed as a multiplexer which can be driven cyclically in test operation and which has n multiplexer switches (M1, M2, M3) for the selective switch-through of in each case (n−1) input channels to an output channel, that b) the input channels which lead to a multiplexer switch (e.g. M1) are each connected to (n−1) computers of a computer combination (R1, R2) of the n computers (R1, R2, R3) that differs from the computer combinations (R1, R3 and R2, R3) of the other multiplexer switches (M2, M3), that c) each multiplexer switch switches a different member of the n input channels to its output channel and that d) in order to compare the data telegrams occurring at each multiplexer switch (e.g. M1) with a telegram of another computer, the output channel of each multiplexer switch leads to that computer (R3) which does not form part of the computer combination (R1, R2) that feeds the multiplexer switch in question.

2. A device as claimed in claim 1, characterised in that the function checking of the multi-computer system is carried out by calling up a test programme, provided for this purpose, when predetermined fixed points of the computer processing system are reached and the computer processing programme is interrupted for the duration of the function check.

3. A device as claimed in claim 1 or 2, characterised in that the test programme assigns a fictional address to the data telegrams which occur at the output of the data output device during the function checking of the multi-computer system.

4. A device as claimed in claim 1 or 2, characterised in that the control device blocks the output of the data telegrams which occur at the output of the data output device during the function checking of the multi-computer system.

5. A device as claimed in one of the claims 1 to 4, characterised in that the computers themselves form the comparison results, that the computers (e.g. R1, in Fig. 2) store the comparison results (e.g. $V_{12}$) which they form, and forward the stored comparison results at least to those computers (R3) which are unable to carry out this comparison themselves until all the computers (R1, R2, R3) are informed of at least (n−2) comparison results and that the computers determine the type and location of a defect on the basis of the comparison results of which they are informed.

6. A device as claimed in claim 5, characterised in that a comparison result ($V_{12}$), which is formed and stored by the computers (e.g. R1) as a result of a comparison with the data telegrams of another computer (e.g. R2) is transferred by the computers (e.g. R1) to a further computer (R3) during the following telegram comparison with said further computer (R3).

7. A device as claimed in Claim 5 or 6, characterised in that the computers investigate the comparison results with which they are supplied to establish whether the output channels (A1, A2) of the multiplexer (DA) can be exclusively switched to computers (R1, R2, R3) recognised as being in order and that in the event of a positive result the computers carry out this switch-through, whereas in the case of a negative result they disconnect the multi-computer system.

8. A device as claimed in claim 5 and 7, characterised in that only those computers which have been recognised as operating correctly (e.g. R2, R3) disconnect the computers (R1) which have been recognised as operating incorrectly and carry out the switch-over of the multiplexer (DA) or the disconnection of the multi-computer system.

9. A device as claimed in claim 8 for use in a three-computer system, characterised in that the following the formation of two comparison results ($V_{12}$, $V_{13}$) and the acknowledgement of at least those comparison results ($V_{32}$, $V_{23}$) of its two adjoining computers (R2, R3) which do not relate to itself, each computer (e.g. R1) sets (1)·two control signals ($S_{12}$, $S_{13}$) provided the following conditions is fulfilled

$$S_{12}=V_{12}\wedge(V_{32}\vee \overline{V}_{13})$$

$$S_{13}=V_{13}\wedge(V_{23}\vee \overline{V}_{12})$$

wherein $S_{12}$ and $S_{13}$ are the two control signals of a computer 1 and V is a comparison result characterising identity and $\overline{V}$ is a comparison result characterising the non-identity of the data telegrams of the indexed computers 1 to 3, and that all the occurring control signal combinations of the computers (R1, R2, R3)—with the exception of the following reaction assignment shown in table form

8

**0 059 789**

| $S_{12}$ | $S_{13}$ | $S_{21}$ | $S_{23}$ | $S_{31}$ | $S_{32}$ | Reaction |
|---|---|---|---|---|---|---|
| 1 | 1 | 1 | 1 | 1 | 1 | System in order |
| X | X | 0 | 1 | 0 | 1 | Disconnected computer 1 |
| 0 | 1 | X | X | 1 | 0 | Disconnected computer 2 |
| 1 | 0 | 1 | 0 | X | X | Disconnected computer 3 |

(X=either 1 or 0)

result in the disconnection of the computer system.

# FIG 1

## FIG 2

| $V_{12}$ | $V_{13}$ | $V_{21}$ | $V_{23}$ | $V_{31}$ | $V_{32}$ | $S_{12}$ | $S_{13}$ | $S_{24}$ | $S_{23}$ | $S_{31}$ | $S_{32}$ | Defekt | mögl.Reaktion (abschalten) |
|---|---|---|---|---|---|---|---|---|---|---|---|---|---|
| 1 | 1 | 1 | 1 | 1 | 1 | 1 | 1 | 1 | 1 | 1 | 1 | kein Fehler | keine Abschaltreaktion |
| 1 | 1 | 1 | 1 | 1 | 0 | 0 | 1 | 1 | 1 | 1 | 0 | M1.2 | R2 |
| 1 | 1 | 1 | 1 | 0 | 1 | 1 | 1 | 0 | 1 | 0 | 1 | M1.1 | R1 |
| 1 | 1 | 1 | 1 | 0 | 0 | 0 | 1 | 0 | 1 | 0 | 0 | M1 | Syst |
| 1 | 1 | 1 | 0 | 1 | 1 | 1 | 0 | 1 | 0 | 1 | 1 | M2.3 | R3 |
| 1 | 1 | 1 | 0 | 1 | 0 | 0 | 0 | 1 | 0 | 1 | 0 | M2.3, M1.2 | Syst |
| 1 | 1 | 1 | 0 | 0 | 1 | 1 | 0 | 1 | 0 | 0 | 1 | M2.3, M1.1 | R3 |
| 1 | 1 | 1 | 0 | 0 | 0 | 0 | 0 | 1 | 0 | 0 | 0 | M2.3 , M1 | Syst |
| 1 | 1 | 0 | 1 | 1 | 1 | 1 | 1 | 0 | 1 | 0 | 1 | M2.1 | R1 |
| 1 | 1 | 0 | 1 | 1 | 0 | 0 | 1 | 0 | 1 | 1 | 0 | M2.1, M1.2 | R2 |
| 1 | 1 | 0 | 1 | 0 | 1 | X | X | 0 | 1 | 0 | 1 | R1 | R1 |
| 1 | 1 | 0 | 1 | 0 | 0 | 0 | 1 | 0 | 1 | 0 | 0 | R1,M2.1, M1 | Syst |
| 1 | 1 | 0 | 0 | 1 | 1 | 1 | 0 | 0 | 0 | 0 | 1 | M2 | " |
| 1 | 1 | 0 | 0 | 1 | 0 | 0 | 0 | 0 | 0 | 1 | 0 | M2,M1.2 | " |
| 1 | 1 | 0 | 0 | 0 | 1 | 0 | 0 | 0 | 0 | 0 | 1 | R1,M2,M1.1 | " |
| 1 | 1 | 0 | 0 | 0 | 0 | 0 | 0 | 0 | 0 | 0 | 0 | R1,M2, M1 | " |
| 1 | 0 | 1 | 1 | 1 | 1 | 1 | 0 | 1 | 0 | 1 | 1 | M3.3 | R3 |
| 1 | 0 | 1 | 1 | 1 | 0 | 1 | 0 | 1 | 0 | 1 | 0 | M3.3,M1.2 | R3 |
| 1 | 0 | 1 | 1 | 0 | 1 | 1 | 0 | 0 | 0 | 0 | 1 | M3.3,M1.1 | Syst |
| 1 | 0 | 1 | 1 | 0 | 0 | 1 | 0 | 0 | 0 | 0 | 0 | M3.3,M1 | Syst |
| 1 | 0 | 1 | 0 | 1 | 1 | 1 | 0 | 1 | 0 | X | X | R3 | R3 |
| 1 | 0 | 1 | 0 | 1 | 0 | 1 | 0 | 1 | 0 | X | X | R3 | " |
| 1 | 0 | 1 | 0 | 0 | 1 | 1 | 0 | 1 | 0 | X | X | R3 | " |
| 1 | 0 | 1 | 0 | 0 | 0 | 1 | 0 | 1 | 0 | X | X | R3 | " |
| 1 | 0 | 0 | 1 | 1 | 1 | 1 | 0 | 0 | 1 | 0 | 1 | M3.3, M2.1 | R1 |
| 1 | 0 | 0 | 1 | 1 | 0 | 1 | 0 | 0 | 1 | 1 | 0 | M3.3, M2.1, M1.2 | Syst |
| 1 | 0 | 0 | 1 | 0 | 1 | X | X | 0 | 1 | 0 | 1 | R1 | R1 |
| 1 | 0 | 0 | 1 | 0 | 0 | 1 | 0 | 0 | 1 | 0 | 0 | R1, M3.3,M2.1, M1 | Syst |
| 1 | 0 | 0 | 0 | 1 | 1 | 1 | 0 | 0 | 0 | 0 | 1 | R3, M3.3, M2 | " |
| 1 | 0 | 0 | 0 | 1 | 0 | 1 | 0 | 0 | 0 | 1 | 0 | R3, M3.3, M2, M1.2 | " |
| 1 | 0 | 0 | 0 | 0 | 1 | 1 | 0 | 0 | 0 | 0 | 1 | R1,R3,M3.3,M2,M1.1 | " |
| 1 | 0 | 0 | 0 | 0 | 0 | 1 | 0 | 0 | 0 | 0 | 0 | R1,R3,M3.3,M2,M1 | " |

FIG 3a

| $V_{12}$ | $V_{13}$ | $V_{21}$ | $V_{23}$ | $V_{21}$ | $V_{32}$ | $S_{12}$ | $S_{13}$ | $S_{21}$ | $S_{23}$ | $S_{31}$ | $S_{32}$ | Defekt | mögl.Reaktion (abschalten) |
|---|---|---|---|---|---|---|---|---|---|---|---|---|---|
| 0 | 1 | 1 | 1 | 1 | 1 | 0 | 1 | 1 | 1 | 1 | 0 | M3.2 | R2 |
| 0 | 1 | 1 | 1 | 1 | 0 | 0 | 1 | X | X | 1 | 0 | R2 | R2 |
| 0 | 1 | 1 | 1 | 0 | 1 | 0 | 1 | 0 | 1 | 0 | 1 | M3.2,M1.1 | R1 |
| 0 | 1 | 1 | 1 | 0 | 0 | 0 | 1 | 0 | 1 | 0 | 0 | R2,M3.2,M1 | Syst |
| 0 | 1 | 1 | 0 | 1 | 1 | 0 | 1 | 1 | 0 | 1 | 0 | M3.2,M2.3 | R2 |
| 0 | 1 | 1 | 0 | 1 | 0 | 0 | 1 | X | X | 1 | 0 | R2 | R2 |
| 0 | 1 | 1 | 0 | 0 | 1 | 0 | 1 | 1 | 0 | 0 | 1 | M3.2,M2.3,M1.1 | Syst |
| 0 | 1 | 1 | 0 | 0 | 0 | 0 | 1 | 1 | 0 | 0 | 0 | R2,M3.2,M2.3,M1 | " |
| 0 | 1 | 0 | 1 | 1 | 1 | 0 | 1 | 0 | 1 | 0 | 0 | M3.2 M2.1 | R2 |
| 0 | 1 | 0 | 1 | 1 | 0 | 0 | 1 | X | X | 1 | 0 | R2 | R2 |
| 0 | 1 | 0 | 1 | 0 | 1 | X | X | 0 | 1 | 0 | 1 | R1 | R1 |
| 0 | 1 | 0 | 1 | 0 | 0 | 0 | 1 | 0 | 1 | 0 | 0 | R1,R2,M3.2,M2.1,M1 | Syst |
| 0 | 1 | 0 | 0 | 1 | 1 | 0 | 1 | 0 | 0 | 0 | 0 | M3.2,M2 | " |
| 0 | 1 | 0 | 0 | 1 | 0 | 0 | 1 | X | X | 1 | 0 | R2 | R2 |
| 0 | 1 | 0 | 0 | 0 | 1 | 0 | 1 | 0 | 0 | 0 | 1 | R1,M3.2,M2,M1.1 | Syst |
| 0 | 1 | 0 | 0 | 0 | 0 | 0 | 1 | 0 | 0 | 0 | 0 | R1,R2,M3.2,M2,M1 | " |
| 0 | 0 | 1 | 1 | 1 | 1 | 0 | 0 | 1 | 0 | 1 | 0 | M3 | " |
| 0 | 0 | 1 | 1 | 1 | 0 | 0 | 0 | 1 | 0 | 1 | 0 | R2,M3,M1.2 | " |
| 0 | 0 | 1 | 1 | 0 | 1 | 0 | 0 | 0 | 0 | 0 | 1 | M3,M1.1 | " |
| 0 | 0 | 1 | 1 | 0 | 0 | 0 | 0 | 0 | 0 | 0 | 0 | R2,M3,M1 | " |
| 0 | 0 | 1 | 0 | 1 | 1 | 0 | 0 | 1 | 0 | 1 | 0 | R2,M3,M2.1 | " |
| 0 | 0 | 1 | 0 | 1 | 0 | 0 | 0 | 1 | 0 | 1 | 0 | R2,R3,M3,M2.3 | " |
| 0 | 0 | 1 | 0 | 0 | 1 | 0 | 0 | 1 | 0 | 0 | 1 | R3,M3,M2.3,M1.1 | " |
| 0 | 0 | 1 | 0 | 0 | 0 | 0 | 0 | 1 | 0 | 0 | 0 | R2,R3,M3,M2.3,M1 | " |
| 0 | 0 | 0 | 1 | 1 | 1 | 0 | 0 | 0 | 1 | 0 | 0 | M3,M2.1 | " |
| 0 | 0 | 0 | 1 | 1 | 0 | 0 | 0 | 0 | 1 | 1 | 0 | R2,M3,M2.1,M1.2 | " |
| 0 | 0 | 0 | 1 | 0 | 1 | X | X | 0 | 1 | 0 | 1 | R1 | R1 |
| 0 | 0 | 0 | 1 | 0 | 0 | 0 | 0 | 0 | 1 | 0 | 0 | R1,R2,M3,M2.1,M1.1 | Syst |
| 0 | 0 | 0 | 0 | 1 | 1 | 0 | 0 | 0 | 0 | 0 | 0 | R3,M3,M2 | " |
| 0 | 0 | 0 | 0 | 1 | 0 | 0 | 0 | 0 | 0 | 1 | 0 | R2,R3,M3,M2,M1.2 | " |
| 0 | 0 | 0 | 0 | 0 | 1 | 0 | 0 | 0 | 0 | 0 | 1 | R1,R3,M3,M2,M1.1 | " |
| 0 | 0 | 0 | 0 | 0 | 0 | 0 | 0 | 0 | 0 | 0 | 0 | R1,R2,R3,M3,M2,M1 | " |

FIG 3b